# EUROPEAN PATENT APPLICATION

(11) **EP 4 782 176 A1**
(43) Date of publication of application: **29.07.2026**
(21) Application number: 24867830.2
(22) Date of filing: 22.05.2024
(51) Int. Cl.: B29C 45/13, B29C 45/10

(54) **VERTICAL INJECTION MOLDING DEVICE**

(30) Priority: 19.09.2023 JP 2023150911
(71) Applicant: Nissei Plastic Industrial Co., Ltd., Hanishina-gun, Nagano 389-0693 (JP)
(72) Inventor: YODA, Hozumi, Hanishina-gun, Nagano 389-0693 (JP); HANAOKA, Masaru, Hanishina-gun, Nagano 389-0693 (JP)
(74) Representative: Berghofer, Benedikt
(86) International application number: PCT/JP2024/018764
(87) International publication number: WO 2025/062743

(57) **Abstract**

A vertical injection molding apparatus (10) includes a mold clamping device (20) in which a mold clamping axis (20a) is vertical; a turntable (23) on which a lower mold (13) is placed and which moves between a mold clamping position and a product removal position; and an injection device (50) in which an injection axis (50a) is vertical. The injection device (50) includes a pair of a left first heating cylinder (53L) and a right second heating cylinder (53R), and a Y-shaped adapter (80) connected to bottoms of the first heating cylinder (53L) and the second heating cylinder (53R), the Y-shaped adapter (80) being configured to merge a resin material from the first heating cylinder (53L) and the resin material from the second heating cylinder (53R) and inject the resin material from one nozzle (53a).

## Description

### TECHNICAL FIELD

The present invention relates to an improved technology for a vertical injection molding apparatus.

### BACKGROUND ART

Injection molding apparatuses that obtain resin-molded products (hereinafter referred to as "products") by injecting a resin material into a mold are widely used in practice.

Injection molding apparatuses include horizontal injection molding apparatuses and vertical injection molding apparatuses. Among vertical injection molding apparatuses, a turntable-type vertical injection molding apparatus including a turntable is known (for example, refer to Patent Document 1 (FIG. 1)).

Patent Document 1 will be described with reference to the following drawing.

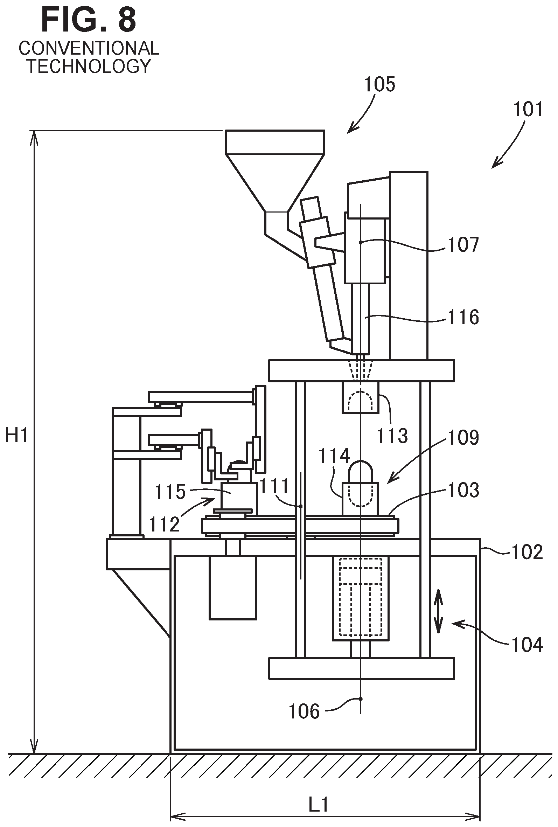

FIG. 8 is a side view of a conventional turntable-type vertical injection molding apparatus.

As shown in FIG. 8, a vertical injection molding apparatus 101 includes a turntable 103 on a bed 102, and a mold clamping device 104 on the bed 102 with the turntable 103 sandwiched therebetween. Furthermore, an injection device 105 is provided on the mold clamping device 104.

The mold clamping axis 106 of the mold clamping device 104 and the injection axis 107 of the injection device 105 are both vertical and a common axis.

A portion of the turntable 103 that overlaps the mold clamping axis 106 becomes a mold clamping position 109, and a portion of the turntable 103 that is symmetrical to that portion about a rotation axis 111 becomes a product removal position 112 where a product is removed.

An upper mold 113 and a first lower mold 114 are disposed along the mold clamping axis 106. At this time, a second lower mold 115 is disposed at the product removal position 112.

The upper mold 113 is aligned with the first lower mold 114, the upper mold 113 and the first lower 114 are clamped by the mold clamping device 104, and a resin material is injected from a heating cylinder 116 of the injection device 105.

Once the resin material is solidified, the upper mold 113 is raised, and the turntable 103 is rotated by 180°. Then, the first lower mold 114 moves to the product removal position 112, and the product is removed in this state. The second lower mold 115 is moved to the mold clamping position 109 by the rotation of the turntable 103. The next injection molding is performed using the second lower mold 115 and the upper mold 113.

The turntable type has the advantage of increased production efficiency since the injection of the resin material and the removal of the product are performed simultaneously in parallel.

Incidentally, when the product increases in size, the injection device 105 becomes larger. Specifically, the outer diameter of the heating cylinder 116 increases, and the axial length of the heating cylinder 116 increases.

When the axial length increases, a height H1 of the vertical injection molding apparatus 101 increases.

When the ceiling of a building where the vertical injection molding apparatus 101 is installed is low, the vertical injection molding apparatus 101 having a large height H1 cannot be installed.

In this case, an injection molding apparatus having a small height is required. Various injection molding apparatuses of the turntable type having a small height have been put into practical use (for example, refer to Patent Document 2 (FIG. 4)).

Patent Document 2 will be described with reference to the following drawing.

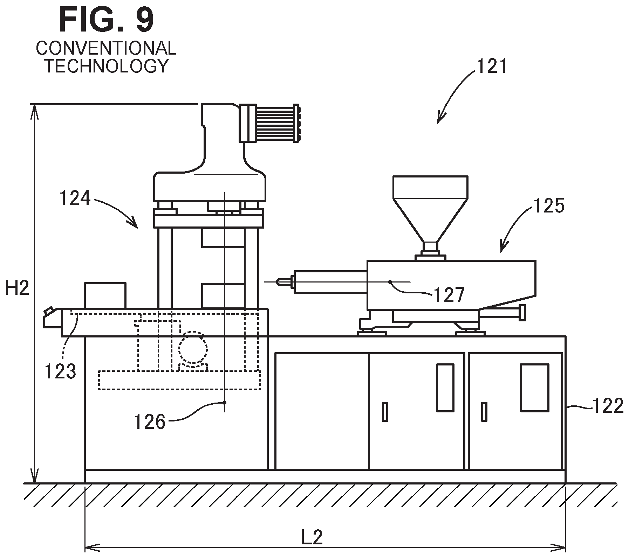

FIG. 9 is a front view of another conventional turntable-type injection molding apparatus.

As shown in FIG. 9, an injection molding apparatus 121 includes a turntable 123 on a bed 122, and a mold clamping device 124 on the bed 122 with the turntable 123 sandwiched therebetween. Furthermore, an injection device 125 is provided next to the mold clamping device 124.

A mold clamping axis 126 of the mold clamping device 124 is vertical, and an injection axis 127 of the injection device 125 is horizontal. Even if the axial length of the injection device 125 increases as the size of a product increases, a height H2 of the injection molding apparatus 121 remains almost unchanged, and the height H2 can be kept small.

Therefore, Patent Document 2 provides the injection molding apparatus 121 that can be installed in a building with a low ceiling despite the product size increase.

However, the injection molding apparatus 121 of Patent Document 2 has the disadvantages described below.

A horizontal length L2 of the injection molding apparatus 121 increases as the size of the product increases. When the horizontal length L2 increases, a so-called floor area occupied increases. When the floor area occupied increases, the required number of injection molding apparatuses 121 cannot be installed in a building having a certain floor area. The number of the injection molding apparatuses 121 decreases, productivity decreases.

In the case of the vertical injection molding apparatus 101 shown in FIG. 8, a horizontal length L1 is sufficiently small, and the required number of vertical injection molding apparatuses 101 can be easily installed in a building having a certain floor area.

Therefore, a turntable-type vertical injection molding apparatus capable of reducing the height H1 while ensuring a sufficiently large injection volume is desired.

### CITATION LIST

### PATENT DOCUMENT

Patent Document 1: Japanese Patent No. 5781675
Patent Document 2: Japanese Unexamined Patent Publication No. H8-174594

### DISCLOSURE OF THE INVENTION

### PROBLEM TO BE SOLVED BY THE INVENTION

An object of the invention is to provide a turntable-type vertical injection molding apparatus including a vertical injection device, which can reduce the height while ensuring a sufficiently large injection volume.

### MEANS FOR SOLVING PROBLEM

The present inventors have made various attempts to reduce the height of a turntable-type vertical injection molding apparatus. During these attempts, the present inventors have reached the finding that by replacing one heating cylinder with two heating cylinders, the height of the injection molding apparatus can be reduced while ensuring the injection volume. The process of this finding will be described with reference to the following figures.

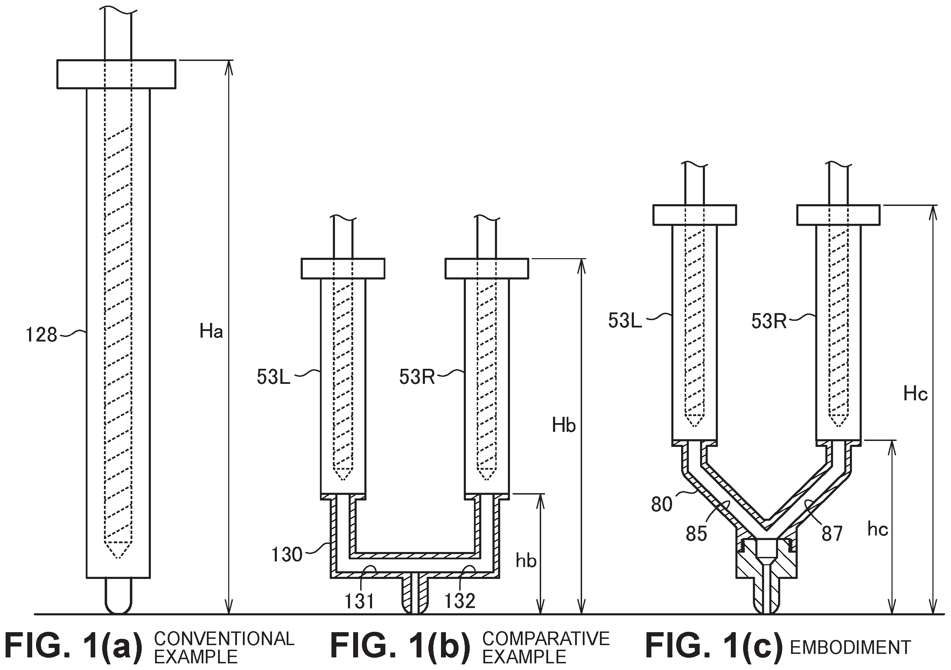

A heating cylinder 128 shown in FIG. 1(a) has a sufficiently large injection volume. The axial length of the heating cylinder 128, that is, the height is Ha.

It is contemplated to replace the heating cylinder 128 with two heating cylinders.

As shown in FIG. 1(b), the heating cylinder 128 is replaced with a first heating cylinder 53L and a second heating cylinder 53R. Since the first heating cylinder 53L has half the injection volume of the heating cylinder 128, the first heating cylinder 53L has a smaller diameter and length. The same applies to the second heating cylinder 53R.

However, it is necessary to connect an adapter for merge to the outlet of the first heating cylinder 53L and the outlet of the second heating cylinder 53R. The potential adapter is a T-shaped adapter 130.

The T-shaped adapter 130 allows a resin material injected from the first heating cylinder 53L and the resin material injected from the second heating cylinder 53R to be combined and injected from a nozzle.

However, the T-shaped adapter 130 has the advantages and disadvantages described below.

The T-shaped adapter 130 has the advantage that a height dimension hb is reduced.

On the other hand, there is a disadvantage in that the resin material flowing through a first horizontal flow passage 131 and the resin material flowing through a second horizontal flow passage 132 directly collide with each other from the left and right, thereby disturbing the flow of the resin material.

Considering the flow of the resin material, it is desirable that the surface of the first horizontal flow passage 131 or the second horizontal flow passage 132 is smooth. However, due to its structure, the T-shaped adapter 130 is difficult to subject to honing.

If the T-shaped adapter 130 is split, honing can be performed; however, it is necessary to split the T-shaped adapter 130 into at least two portions, preferably four portions, and the split portions need to be coupled using flanges or screws. As a result, the structure of the T-shaped adapter 130 becomes complicated.

To overcome the disadvantage described above, the present inventors have reached the idea shown in FIG. 1(c).

As shown in FIG. 1(c), the adapter is configured as a Y-shaped adapter 80.

However, the Y-shaped adapter 80 has the disadvantages and advantages described below.

The disadvantage is that a height hc of the Y-shaped adapter 80 is larger than the height hb of the T-shaped adapter 130.

As a result, as shown in FIG. 1(a) to FIG. 1(c), a height Hc obtained by adding the height of the first heating cylinder 53L to the height of the Y-shaped adapter 80 is larger than a height Hb obtained by adding the height of the first heating cylinder 53L to the height of the T-shaped adapter 130, but is sufficiently smaller than the height Ha of the heating cylinder 128.

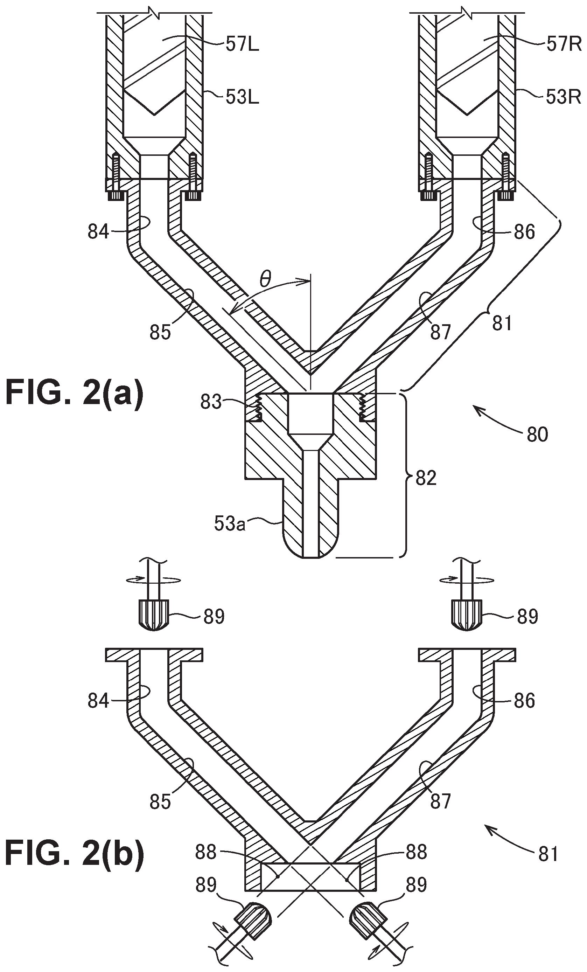

The advantages of the Y-shaped adapter 80 shown in FIG. 1(c) will be described in detail with reference to FIG. 2(a) and FIG. 2(b).

FIG. 2(a) is a cross-sectional view of the Y-shaped adapter according to the invention, and FIG. 2(b) is a view for explaining honing.

As shown in FIG. 2(a), the Y-shaped adapter 80 is a member having two inlets and one outlet, and is composed of a V-shaped portion 81 connected to the tip (lower end) of the first heating cylinder 53L and the tip (lower end) of the second heating cylinder 53R using bolts or the like, and an I-shaped portion 82 extending downward from the V-shaped portion 81. The V-shape is formed by the V-shaped portion 81 and the I-shaped portion 82.

The V-shaped portion 81 and the I-shaped portion 82 can be separated from each other, and are integrated by screw coupling or flange coupling.

In addition to a screw portion 83, a nozzle 53a is formed in the I-shaped portion 82.

The V-shaped portion 81 has a first downward flow passage 84 connected to the first heating cylinder 53L; a first oblique flow passage 85 extending obliquely from the lower end of the first downward flow passage 84; a second downward flow passage 86 connected to the second heating cylinder 53R; and a second oblique flow passage 87 extending obliquely from the lower end of the second downward flow passage 86.

An inclination angle θ of the first oblique flow passage 85 with respect to the vertical axis is preferably set to 45°. When the inclination angle θ is much greater than 45°, there is a concern that the resin materials collide with each other, and when the inclination angle θ is much less than 45°, the height dimension increases. As long as the inclination angle θ falls within a range in which collisions between the resin materials are avoided and an increase in height dimension is permitted, the inclination angle θ may be set to a value different from 45°.

The same applies to the second oblique flow passage 87.

As shown in FIG. 2(b), since the first downward flow passage 84 and the second downward flow passage 86 have open upper portions, a rotary grindstone 89 can be inserted from above. As a result, the surfaces of the first downward flow passage 84 and the second downward flow passage 86 are honed to be smooth.

A downward extension line 88 of the first oblique flow passage 85 and the downward extension line 88 of the second oblique flow passage 87 do not interfere with the wall of the V-shaped portion 81. As a result, the rotary grindstone 89 can be inserted from below.

As described above, according to the Y-shaped adapter 80 shown in FIG. 2(a) and FIG. 2(b), the resin material flowing through the first oblique flow passage 85 and the resin material flowing through the second oblique flow passage 87 merge smoothly without directly colliding with each other. That is, there is the advantage that the flow of the resin material is not disturbed.

In addition, there is a second advantage in that the first oblique flow passage 85 and the second oblique flow passage 87 can be easily subjected to finishing such as honing.

The invention completed based on the above findings is as follows.

According to a first aspect of the invention, a vertical injection molding apparatus includes a mold clamping device in which a mold clamping axis is vertical and which clamps an upper mold onto a lower mold; a turntable on which the lower mold is placed and which moves between a mold clamping position and a product removal position; and an injection device in which an injection axis is vertical and which is disposed on the mold clamping device and injects a resin material into a mold composed of the upper mold and the lower mold. The injection device includes a pair of a left first heating cylinder and a right second heating cylinder, and a Y-shaped adapter connected to bottoms of the first heating cylinder and the second heating cylinder, the Y-shaped adapter being configured to merge the resin material from the first heating cylinder and the resin material from the second heating cylinder and inject the resin material from one nozzle.

Preferably, according to a second aspect of the invention, in the vertical injection molding apparatus according to the first aspect, the Y-shaped adapter is composed of a V-shaped portion connected to the bottoms of the first heating cylinder and the second heating cylinder, and an I-shaped portion detachably connected to the V-shaped portion and including the nozzle. The V-shaped portion has a first oblique flow passage and a second oblique flow passage, and downward extension lines obtained by extending the first oblique flow passage and the second oblique flow passage downward do not interfere with a wall of the V-shaped portion.

Preferably, according to a third aspect of the invention, in the vertical injection molding apparatus according to the first or second aspect, the mold clamping device includes a pressure-receiving platen fixed to a bed, a pull-in platen disposed below the pressure-receiving platen and raised and lowered by a half-nut position adjustment mechanism, a movable platen disposed above the pressure-receiving platen and raised and lowered by a mold opening and closing mechanism, and a tie bar extending downward from the movable platen and penetrating through the pressure-receiving platen and the pull-in platen, and clamps the mold disposed between the pressure-receiving platen and the movable platen. An engaging portion is provided at a lower end portion of the tie bar, and a half-nut that engages with the engaging portion is provided below the pull-in platen.

### EFFECT OF THE INVENTION

According to the first aspect of the invention, in the turntable-type vertical injection molding apparatus, the heating cylinder extending upward is composed of the pair of the left first heating cylinder and the right second heating cylinder. The height of the first heating cylinder and the second heating cylinder can be significantly reduced by dividing one heating cylinder into two heating cylinders. The injection volume is the sum of an injection volume of the first heating cylinder and an injection volume of the second heating cylinder, so that a sufficient size can be ensured.

In addition, since the Y-shaped adapter merges the resin material from the first heating cylinder and the resin material from the second heating cylinder and injects the resin material from one nozzle, strong collisions between the resin materials are avoided, and smooth injection is performed.

As a result, the first aspect provides a turntable-type vertical injection molding apparatus including a vertical injection device capable of reducing the height while ensuring a sufficiently large injection volume.

According to the second aspect of the invention, since the V-shaped portion that is a main part of the Y-shaped adapter has a structure in which the downward extension line of the first oblique flow passage and the downward extension line of the second oblique flow passage do not interfere with the wall of the V-shaped portion, a rotary grindstone can be easily inserted into the first oblique flow passage and the second oblique flow passage. The surfaces of the first oblique flow passage and the second oblique flow passage can be made smooth by the rotary grindstone. If the surfaces are smooth, the flow of the resin material becomes smooth.

According to the third aspect of the invention, the half-nut is employed. In the case of a half-nut type, the height can be further reduced than that of the vertical injection molding apparatus 101 shown in FIG. 8.

By employing the half-nut in addition to configuring the heating cylinder as the pair of the left first heating cylinder and the right second heating cylinder, the height of the turntable-type vertical injection molding apparatus can be even further reduced.

### BRIEF DESCRIPTION OF DRAWINGS

FIG. 1(a) to FIG. 1(c) are views for explaining a process leading to the completion of the invention;
FIG. 2(a) is a cross-sectional view of a Y-shaped adapter according to the invention, and FIG. 2(b) is a view for explaining honing;
FIG. 3 is a view showing an overall configuration of a vertical injection molding apparatus according to the invention;
FIG. 4 is a view taken along line 4-4 in FIG. 3;
FIG. 5 is a view for explaining the action of the vertical injection molding apparatus;
FIG. 6(a) and FIG. 6(b) are views for explaining the action of an injection device that is one element of the vertical injection molding apparatus;
FIG. 7(a) is a view showing a modification example of the Y-shaped adapter, and FIG. 7(b) is a view for explaining the action of a check valve;
FIG. 8 is a side view of a conventional turntable-type vertical injection molding apparatus; and
FIG. 9 is a front view of another conventional turntable-type injection molding apparatus.

### BEST MODE FOR CARRYING OUT THE INVENTION

An embodiment of the invention will be described below with reference to the accompanying drawings. It should be noted that, in a cylinder, "extension" means that a piston rod moves forward to extend the overall length of the cylinder, and "retraction" means that the piston rod moves backward to retract the overall length of the cylinder.

### [Embodiment]

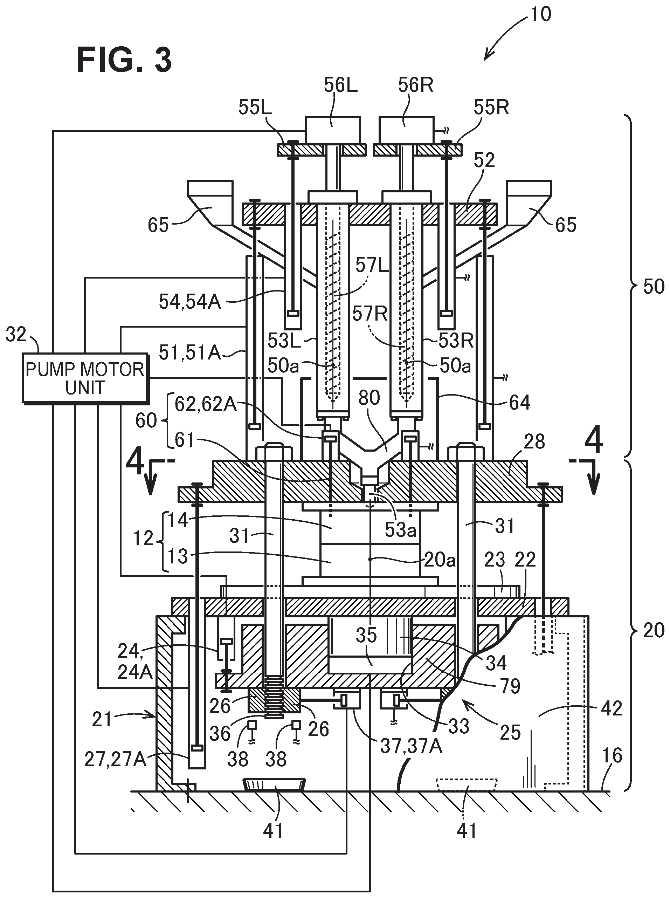

As shown in FIG. 3, a vertical injection molding apparatus 10 is an apparatus including, as main elements, a mold clamping device 20 in which a mold clamping axis 20a is vertical and which clamps a mold 12 composed of a lower mold 13 and an upper mold 14, and an injection device 50 in which an injection axis 50a is vertical and which is vertically disposed on the mold clamping device 20.

The mold clamping device 20 includes a bed 21 fixed to a floor (or machine base) 16; a pressure-receiving platen 22 fixed to the bed 21; a turntable 23 placed on the pressure-receiving platen 22; a pull-in platen 79 disposed below the pressure-receiving platen 22 and raised and lowered by a half-nut position adjustment mechanism 24 provided on the pressure-receiving platen 22; half-nuts 26 disposed below the pull-in platen 79 including a mold clamping cylinder 33; a movable platen 28 disposed above the pressure-receiving platen 22 and raised and lowered by a mold opening and closing mechanism 27 provided on the pressure-receiving platen 22; tie bars 31 extending downward from the movable platen 28 and penetrating through the pressure-receiving platen 22 and the pull-in platen 79; and a pump motor unit 32 that supplies pressure oil to the half-nut position adjustment mechanism 24, the mold clamping cylinder 33, the mold opening and closing mechanism 27, and the like.

A half-nut position adjustment hydraulic cylinder 24A is suitable as the half-nut position adjustment mechanism 24. Similarly, a mold clamping mechanism 25 is preferably the mold clamping cylinder 33, and the mold opening and closing mechanism 27 is preferably a mold opening and closing hydraulic cylinder 27A.

It should be noted that the pressure-receiving platen 22 can be removed from the bed 21 by loosening bolts or the like. Therefore, "fixing" in the invention includes a form of separable coupling, in addition to complete fixing.

In addition, the half-nut position adjustment mechanism 24 or the mold opening and closing mechanism 27 may be provided on the bed 21.

The mold clamping mechanism 25 includes, for example, the mold clamping cylinder 33 that opens upward. A piston portion 34 extending downward from the pressure-receiving platen 22 is accommodated in the mold clamping cylinder 33. A pressure oil chamber 35 is formed between the mold clamping cylinder 33 and the piston portion 34. When the pressure oil is supplied to the pressure oil chamber 35, the pull-in platen 79 lowers.

An engaging portion 36 is provided at the lower end portion of each of the tie bars 31. The engaging portion 36 is, for example, a sawtooth portion. Hereinafter, the engaging portion 36 is read as the sawtooth portion 36.

Each of the half-nuts 26 is a split nut that engages (meshes) with the sawtooth portion 36 serving as an engaging portion. The half-nut 26 is opened and closed by a half-nut opening and closing mechanism 37 provided on the pull-in platen 79. The half-nut opening and closing mechanism 37 is preferably a half-nut opening and closing hydraulic cylinder 37A.

The sawtooth portion 36 preferably has teeth arranged at equal pitches, similar to the joints of a bamboo. The teeth may have any of a rectangular cross-section, a trapezoidal cross-section, or a triangular cross-section. The half-nut 26 is provided with corresponding teeth.

The tie bar 31 and the half-nut 26 are made of strong and hard steel. To smooth the contact between the steel, grease lubrication is applied between the sawtooth portion 36 and the half-nut 26. The outer peripheral surface of the tie bar 31 is greased at a position higher than the sawtooth portion 36. The grease flows down and reaches the sawtooth portion 36. The greasing may be performed automatically or manually.

Preferably, a half-nut operation monitoring mechanism 38 that monitors the operation of the half-nut 26 is provided in the vicinity of the half-nut 26. However, the half-nut operation monitoring mechanism 38 may be omitted, on the condition that the position control of the mold opening and closing mechanism 27 and the half-nut position adjustment mechanism 24 is precisely performed.

As the half-nut operation monitoring mechanism 38, any sensor such as a proximity switch or a limit switch can be used. Among the sensors, the proximity sensor is a non-contact sensor that determines "that an object is present" when the mating metal approaches with a certain distance, and determines "that no object is present" when the mating metal moves away beyond the certain distance. The half-nut 26 is wet with waste grease; however, in the case of using a non-contact sensor, the risk of false detection is eliminated. Moreover, the proximity sensor is inexpensive. Therefore, the proximity switch is recommended.

Preferably, a tray 41 that receives waste grease is disposed below the half-nut 26 and on the floor 16. The tray 41 is a dish-shaped container. The contamination of the floor 16 is prevented by periodically or as needed pulling out the tray 41 and processing the accumulated waste grease.

Preferably, the bed 21 is surrounded by a cover 42. The cover 42 functions as a safety cover. The appearance of the mold clamping device 20 is enhanced by surrounding the bed 21 with the cover 42. However, the cover 42 is not essential since the cover 42 can be replaced with a safety fence or the like.

The injection device 50 is composed of an injection device moving mechanism 51 erected on the movable platen 28; an injection base 52 supported by the injection device moving mechanism 51; a first heating cylinder 53L and a second heating cylinder 53R that extend downward while being supported by the injection base 52; a Y-shaped adapter 80 connected to the tips (lower ends in the figure) of the first heating cylinder 53L and the second heating cylinder 53R; an injection mechanism 54 provided on the injection base 52, the piston rod of the injection mechanism 54 extending upward; a first screw drive base 55L and a second screw drive base 55R supported by the injection mechanism 54; a first screw rotation mechanism 56L and a second screw rotation mechanism 56R supported by the first screw drive base 55L and the second screw drive base 55R; and a first screw 57L and a second screw 57R that extend downward from the first screw rotation mechanism 56L and the second screw rotation mechanism 56R, and that enter the first heating cylinder 53L and the second heating cylinder 53R.

For the sake of convenience, the longitudinal center axes of the first heating cylinder 53L and the second heating cylinder 53R are defined as the injection axis 50a.

The Y-shaped adapter 80 functions to merge a resin material from the first heating cylinder 53L and the resin material from the second heating cylinder 53R and inject the resin material from one nozzle 53a.

The first screw rotation mechanism 56L and the second screw rotation mechanism 56R are, for example, hydraulic motors.

The injection device moving mechanism 51 is preferably an injection device moving hydraulic cylinder 51A, and the injection mechanism 54 is preferably an injection cylinder 54A.

More preferably, a purging cover 64 that surrounds the first heating cylinder 53L and the second heating cylinder 53R is provided on the movable platen 28. In addition, an upper mold ejector 60 is provided on the movable platen 28. The upper mold ejector 60 is composed of an ejector pin 61 extending to the upper mold 14, and a pin moving mechanism 62 that moves the ejector pin 61, and functions to push down a liner remaining in the upper mold 14. The pin moving mechanism 62 is preferably a pin moving hydraulic cylinder 62A; however, an electric cylinder can also be used.

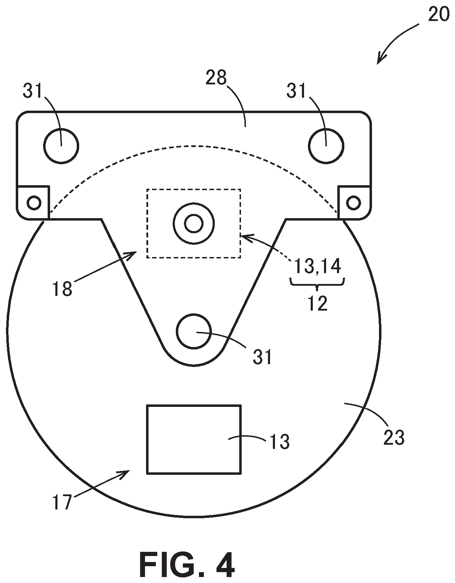

FIG. 4 is a view taken along line 4-4 in FIG. 3.

As shown in FIG. 4, the tie bars 31 are disposed at the respective vertices of a triangle. One of the tie bars 31 constitutes the rotation center of the turntable 23.

The product is removed from the lower mold 13 at a product removal position 17. The lower mold 13 that is empty is moved to a mold clamping position 18 by rotating the turntable 23 by 180°.

Since the product removal work and the mold clamping work are performed in parallel, productivity can be increased by employing the turntable 23.

In the mold clamping device 20 shown in FIG. 3, the half-nut 26 is opened and separated from the sawtooth portion 36. Next, the mold opening and closing mechanism 27 is extended to raise the movable platen 28. As the movable platen 28 rises, the upper mold 14 separates from the lower mold 13, and the tie bar 31 rises.

In addition, in the injection device 50, the injection device moving mechanism 51 is extended to raise the injection base 52. As the injection base 52 rises, the first heating cylinder 53L and the second heating cylinder 53R rise.

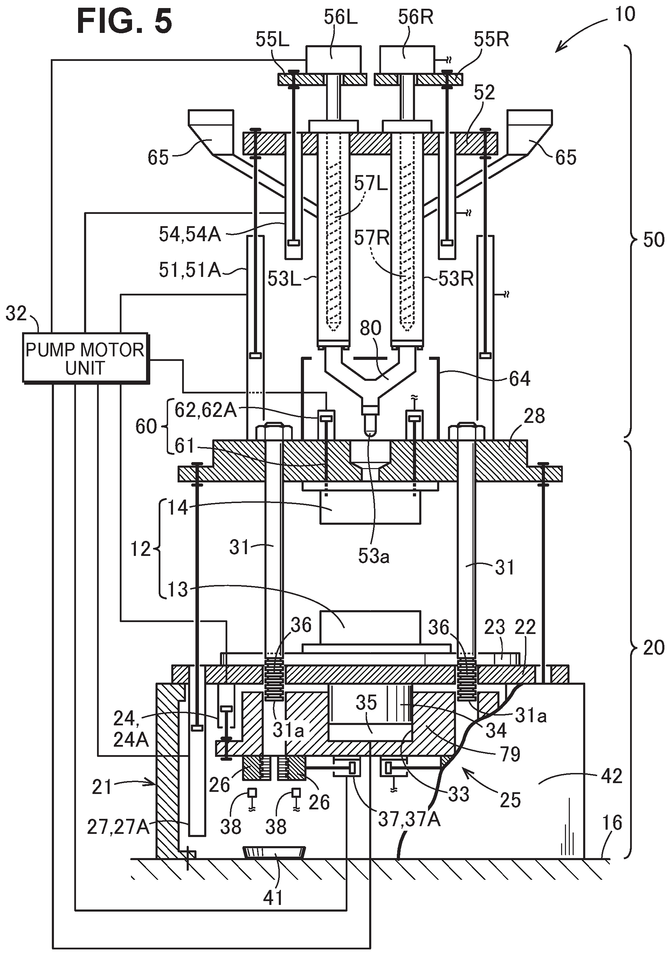

The above results are shown in FIG. 5.

As shown in FIG. 5 which illustrates a maximum mold open state, a lower end portion 31a of the tie bar 31 has risen into the pull-in platen 79. As a result, the tie bar 31 can be sufficiently shortened. If the tie bar 31 is short, the tie bar 31 becomes lighter, and the material is saved.

That is, in the conventional technology, a structure in which the lower end portion 31a of the tie bar 31 is constantly outside of the pull-in platen 79 is preferred. In contrast, according to the structure shown in FIG. 5, the tie bar 31 can be significantly shortened.

When the tie bar 31 is shortened, the height of the mold clamping device 20 is reduced. When the height of the mold clamping device 20 is reduced, the height of the vertical injection molding apparatus 10 is reduced.

That is, by changing one heating cylinder into the two first heating cylinder 56L and second heating cylinder 56R, the height of the injection device 50 is reduced, and the tie bar 31 is shortened. As a result, the height of the mold clamping device 20 is reduced, and accordingly, the height of the vertical injection molding apparatus 10 is further reduced.

In addition, the first heating cylinder 53L and the second heating cylinder 53R may be raised to perform purging work for discharging the accumulated resin material. The purging work is also referred to as a discarding shot process. In the discarding shot process, the resin material is ejected from the nozzle 53a; however, scattering is prevented by the purging cover 64. An operator opens the purging cover 64 as needed or appropriately, and removes the accumulated resin material.

According to the invention, the purging cover 64 that surrounds the nozzle 53a can be easily disposed on the movable platen 28.

In the vertical injection molding apparatus 10, the operation of the mold clamping device 20 and the operation of the injection device 50 are performed in parallel.

First, the operation of the mold clamping device 20 will be described.

In FIG. 5, the mold opening and closing mechanism 27 is retracted to lower the movable platen 28, the upper mold 14, and the tie bar 31. The lowering of the tie bar 31 and the like ends at the time that the upper mold 14 comes into contact with the lower mold 13.

There is a phase shift between the sawtooth portion 36 and the half-nut 26. The pull-in platen 79 is slightly raised or lowered by the half-nut position adjustment mechanism 24 such that the phase becomes zero. Once the adjustment is complete, the half-nut opening and closing mechanism 37 is extended to mesh the sawtooth portion 36 with the half-nut 26.

Meanwhile, if the meshing is faulty, a meshing fault is detected by the half-nut operation monitoring mechanism 38. In the event of a meshing fault, the injection molding work is interrupted, and countermeasures are taken.

If a meshing fault is detected, the pressure oil is supplied to the pressure oil chamber 35 of the mold clamping cylinder 33 as shown in FIG. 3. Then, the pull-in platen 79 lowers, thereby pulling down the tie bar 31 and lowering the movable platen 28. As described above, the mold 12 is clamped.

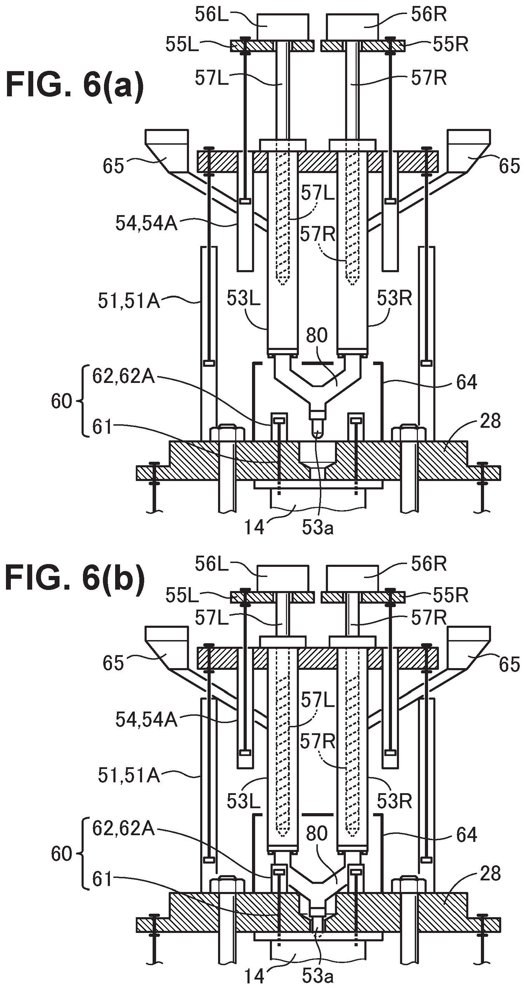

Next, the operation of the injection device 50 will be described with reference to FIG. 5 and FIG. 6.

In FIG. 5, the first screw 57L and the second screw 57R are rotated at a predetermined speed in a predetermined direction by the first screw rotation mechanism 56L and the second screw rotation mechanism 56R. The resin material is supplied to the first heating cylinder 53L and the second heating cylinder 53R via a hopper 65. The resin material descends through the groove of the first screw 57L and the groove of the second screw 57R. The resin material becomes plasticized through heating and kneading.

The resin material accumulates below the first screw 57L and the second screw 57R inside the first heating cylinder 53L and the second heating cylinder 53R. Due to the reaction force from this accumulation, the first screw 57L and the second screw 57R gradually rise. A value obtained by multiplying the cross-sectional area of the first screw 57L and the second screw 57R by the movement amount of the screws becomes a metering value. Once the metering value reaches a predetermined value, the plasticization and metering process ends.

FIG. 6(a) is a view showing a state when the plasticization and metering process is completed, and in FIG. 6(b), the injection device moving mechanism 51 is retracted.

As shown in FIG. 6(b), the nozzle 53a comes into a predetermined position on the upper mold 14. Next, the injection mechanism 54 is retracted to move forward (lower) the first screw 57L and the second screw 57R. The resin material is injected into the upper mold 14 by the first screw 57L and the second screw 57R moving forward.

In addition, since the bed 21 is surrounded by the cover 42, the appearance of the mold clamping device 20 can be enhanced. On the other hand, it becomes difficult to visually inspect the half-nut 26.

In the invention, since the operation of the half-nut 26 is monitored by the half-nut operation monitoring mechanism 38, visual inspection becomes unnecessary, and the operation of the mold clamping device 20 is stably maintained.

In addition, the mold clamping device 20 and the injection device 50 vertically disposed on the movable platen 28 constitute the vertical injection molding apparatus 10.

If the half-nut 26 is located on the movable platen 28 in the mold clamping device 20, the injection device 50 (particularly, the first heating cylinder 53L and the second heating cylinder 53R) interferes with the half-nut 26, and therefore, it becomes difficult to dispose the injection device 50 on the movable platen 28. When the disposition is forced, the structure around the movable platen 28 becomes complicated.

In this regard, according to the invention, since the space above the movable platen 28 is empty, the injection device 50 can be easily disposed on the movable platen 28. In addition to the injection device 50, the purging cover 42, the upper mold ejector 60, or the like can be disposed on the movable platen 28.

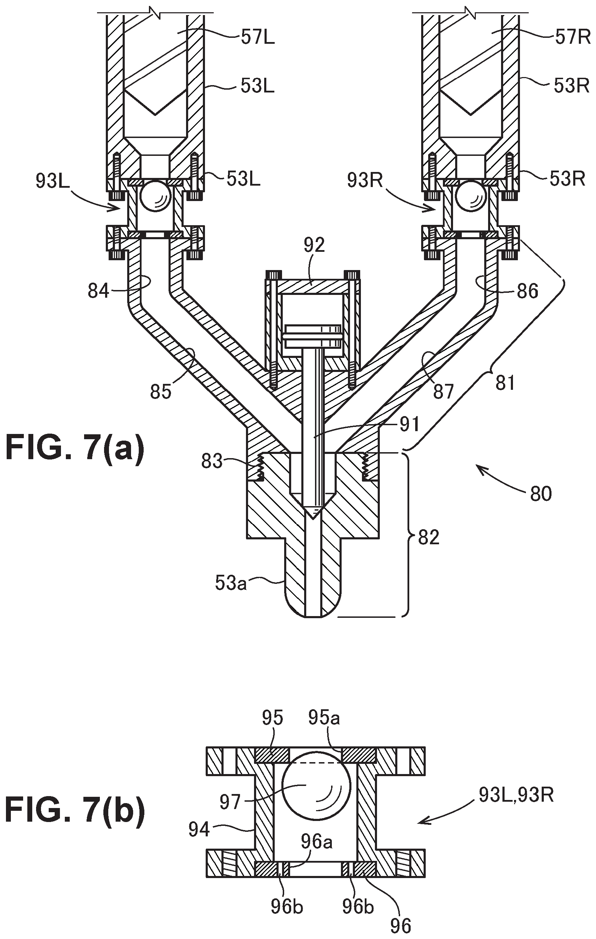

An improvement configuration of the Y-shaped adapter 80 described with reference to FIG. 2(a) and FIG. 2(b) will be described with reference to FIG. 7(a) and FIG. 7(b).

As shown in FIG. 7(a), the Y-shaped adapter 80 includes a needle 91 that closes the nozzle 53a, and a vale opening and closing hydraulic cylinder 92 provided in a V-shaped portion 81 to raise and lower the needle 91.

Injection molding includes an injection step of injecting the resin material into the cavity of the mold; a pressure holding step of applying back pressure to the injected resin material; and a metering step of metering the resin material by moving backward the first screw 57L and the second screw 57R while rotating the first screw 57L and the second screw 57R.

During the metering step, the nozzle 53a is closed by the needle 91.

At the start of the injection step, injection is performed by raising the needle 91 and setting the nozzle 53a to an open state.

The needle 91 also remains raised during the pressure holding step.

Once pressure holding is completed, the needle 91 is lowered to close the nozzle 53a.

It should be noted that the stroke (the movement distance associated with opening and closing) of the needle 91 may be approximately 1.0 to 2.0 times the outer diameter of the needle 91. If the stroke is set to such a range, the vale opening and closing hydraulic cylinder 92 does not become large.

Preferably, a first check valve 93L is interposed between the first heating cylinder 53L and the V-shaped portion 81, and a second check valve 93R is interposed between the second heating cylinder 53R and the V-shaped portion 81.

As shown in FIG. 7(b), the first check valve 93L is composed of a valve box 94 having a tubular shape, an upper perforated plate 95 fitted into the upper opening of the valve box 94 having a tubular shape by screwing or the like, a lower perforated plate 96 fitted into the lower opening of the valve box 94 by screwing or the like, and a ball 97 accommodated in the valve box 94 so as to be raisable and lowerable. The upper perforated plate 95 has a hole 95a at its center. In addition to a hole 96a at the center of the lower perforated plate 96, the lower perforated plate 96 has sub-holes 96 that surrounds the hole 96a.

The ball 97 moves up and down inside the valve box 94 according to the pressure difference between above and below the ball 97. When the pressure below the ball 97 is dominant, the ball 97 rises and closes the hole 95a, thereby preventing the backflow of the resin material.

When the pressure above the ball 97 is dominant, the ball 97 lowers to permit forward flow. Even if the ball 97 lowers to the maximum extent and closes the hole 96a, the resin material flows through the sub-holes 96b, so that forward flow is maintained.

The same applies to the second check valve 93R.

The resin material may flow from a first oblique flow passage 85 toward a second oblique flow passage 87 for some reasons. At this time, the second check valve 93R is closed, thereby preventing backflow. Similarly, the resin material may flow from the second oblique flow passage 87 toward the first oblique flow passage 85. At this time, the first check valve 93L is closed, thereby preventing backflow.

It should be noted that the first screw rotation mechanism 56L and the second screw rotation mechanism 56R are hydraulic motors, but may be electric motors or electric motors with a speed reducer.

In addition, the engaging portion 36 may be a rough surface, a step portion, or recess formed on the outer periphery of the tie bar 31, in addition to sawtooth portion, and is not limited to have a sawtooth shape.

### INDUSTRIAL APPLICABILITY

The invention is suitable for a vertical injection molding apparatus composed of a mold clamping device in which the mold clamping axis is vertical, and an injection device vertically disposed on the mold clamping device.

### EXPLANATIONS OF LETTERS OR NUMERALS

- 10: VERTICAL INJECTION MOLDING APPARATUS
- 12: MOLD
- 13: LOWER MOLD
- 14: UPPER MOLD
- 17: PRODUCT REMOVAL POSITION
- 18: MOLD CLAMPING POSITION
- 20: MOLD CLAMPING DEVICE
- 20a: MOLD CLAMPING AXIS
- 21: BED
- 22: PRESSURE-RECEIVING PLATEN
- 23: TURNTABLE
- 24: HALF-NUT POSITION ADJUSTMENT MECHANISM
- 25: MOLD CLAMPING MECHANISM
- 26: HALF-NUT
- 27: MOLD OPENING AND CLOSING MECHANISM
- 28: MOVABLE PLATEN
- 31: TIE BAR
- 31a: LOWER END PORTION OF TIE BAR
- 36: ENGAGING PORTION (SAWTOOTH PORTION)
- 50: INJECTION DEVICE
- 50a: INJECTION AXIS
- 53a: NOZZLE
- 53L: FIRST HEATING CYLINDER
- 53R: SECOND HEATING CYLINDER
- 79: PULL-IN PLATEN
- 80: Y-SHAPED ADAPTER
- 81: V-SHAPED PORTION
- 82: I-SHAPED PORTION
- 85: FIRST OBLIQUE FLOW PASSAGE
- 87: SECOND OBLIQUE FLOW PASSAGE
- 88: DOWNWARD EXTENSION LINE

## Claims

1. A vertical injection molding apparatus comprising:
a mold clamping device in which a mold clamping axis is vertical and which clamps an upper mold onto a lower mold;
a turntable on which the lower mold is placed and which moves between a mold clamping position and a product removal position; and
an injection device in which an injection axis is vertical and which is disposed on the mold clamping device and injects a resin material into a mold composed of the upper mold and the lower mold,
wherein the injection device includes a pair of a left first heating cylinder and a right second heating cylinder, and a Y-shaped adapter connected to bottoms of the first heating cylinder and the second heating cylinder, the Y-shaped adapter being configured to merge the resin material from the first heating cylinder and the resin material from the second heating cylinder and inject the resin material from one nozzle.

2. The vertical injection molding apparatus according to claim 1,
wherein the Y-shaped adapter is composed of a V-shaped portion connected to the bottoms of the first heating cylinder and the second heating cylinder, and an I-shaped portion detachably connected to the V-shaped portion and including the nozzle, and
the V-shaped portion has a first oblique flow passage and a second oblique flow passage, and downward extension lines obtained by extending the first oblique flow passage and the second oblique flow passage downward do not interfere with a wall of the V-shaped portion.

3. The vertical injection molding apparatus according to claim 1 or 2,
wherein the mold clamping device includes a pressure-receiving platen fixed to a bed, a pull-in platen disposed below the pressure-receiving platen and raised and lowered by a half-nut position adjustment mechanism, a movable platen disposed above the pressure-receiving platen and raised and lowered by a mold opening and closing mechanism, and a tie bar extending downward from the movable platen and penetrating through the pressure-receiving platen and the pull-in platen, and clamps the mold disposed between the pressure-receiving platen and the movable platen, and
an engaging portion is provided at a lower end portion of the tie bar, and a half-nut that engages with the engaging portion is provided below the pull-in platen.
